# FASCICULE DE BREVET EUROPEEN

(11) **EP 1 601 921 B1**
(45) Date de publication et mention de la délivrance du brevet: **19.10.2016**
(21) Numéro de dépôt: 03815412.6
(22) Date de dépôt: 16.12.2003
(51) Int. Cl.: F28F 9/00, B23K 1/00

(54) **ECHANGEUR DE CHALEUR MUNI D UN RESERVOIR, EN PARTICULIER POU R VEHICULE AUTOMOBILE, ET PROCEDE POUR SA FABRICATION**
WÄRMETAUSCHER VERSEHEN MIT EINEM BEHÄLTER, INSBESONDERE FÜR KRAFTFAHRZEUGE, UND HERSTELLUNGSVERFAHREN DAFÜR.
TANK-EQUIPPED HEAT EXCHANGER WHICH IS INTENDED, IN PARTICULAR, FOR A MOTOR VEHICLE, AND PRODUCTION METHOD THEREOF

(30) Priorité: 20.12.2002 FR 0216402
(43) Date de publication de la demande: 07.12.2005
(73) Titulaire: VALEO SYSTEMES THERMIQUES, 78320 Le Mesnil Saint-Denis (FR)
(72) Inventeur: HUBERT, Sylvain, F-51420 Nogent L'Abbesse (FR); CORMET, Nicolas, F-51100 Reims (FR); LAVENU, Jean, F-51110 Caurel (FR)
(74) Mandataire: Rolland, Jean-Christophe
(86) Numéro de dépôt international: PCT/FR2003/003749
(87) Numéro de publication internationale: WO 2004/065881

(56) Documents cités:
- EP-A- 0 754 579
- DE-A- 19 838 779
- FR-A- 2 757 611
- US-A- 5 582 027
- US-A- 5 713 217
- US-A- 5 901 573
- US-A- 5 946 938
- US-B1- 6 446 714
- PATENT ABSTRACTS OF JAPAN vol. 2000, no. 02, 29 février 2000 (2000-02-29) -& JP 11 325788 A (ZEXEL:KK), 26 novembre 1999 (1999-11-26)

## Description

L'invention concerne les échangeurs de chaleur, notamment pour véhicules automobiles.

Elle concerne plus particulièrement un échangeur de chaleur comprenant un collecteur délimité par une paroi de forme générale tubulaire et un réservoir délimité par une paroi de forme générale tubulaire, qui est assemblé par brasage sur le collecteur.

Un tel échangeur de chaleur peut être réalisé notamment sous la forme d'un condenseur destiné à faire partie d'une installation de climatisation de véhicule automobile. En ce cas, le condenseur est muni d'une entrée pour le fluide réfrigérant en phase gazeuse et d'une sortie pour le fluide réfrigérant en phase liquide. Le réservoir est traversé par le fluide pendant son parcours dans le condenseur pour compenser les variations de volume du fluide réfrigérant et loger en outre une cartouche filtrante et/ou déshydratante. Ce réservoir est aussi appelé "bouteille".

Les échangeurs de chaleur de ce type comprennent habituellement un faisceau de tubes et d'ailettes (généralement des intercalaires ondulés) et ce faisceau est intercalé entre deux collecteurs, ou boîtes collectrices, dont l'un communique avec le réservoir.

Ces échangeurs de chaleur sont le plus souvent fabriqués par pré-assemblage de leurs pièces constitutives puis brasés en une seule opération dans un four de brasage.

Cette solution nécessite par conséquent de prévoir des moyens pour pré-assembler les pièces et les maintenir dans cet état pré-assemblé pendant l'opération de brasage. Ce problème se pose tout particulièrement pour le réservoir qui constitue une pièce lourde et massive devant être correctement positionnée par rapport au collecteur pendant toute l'opération de brasage.

Pour la fabrication d'un échangeur de chaleur, en particulier d'un condenseur, muni d'un réservoir intégré, différentes solutions ont été proposées pour réaliser le maintien du réservoir par rapport au collecteur. Il est connu pour cela de prévoir une patte sur le réservoir qui est assemblée par clinchage (sertissage et déformation mécanique) sur le collecteur. Il est connu aussi de réaliser le pré-assemblage par rivetage ou encore par pointage du réservoir sur le collecteur par une technique de soudage (voir FR 2 785 083 ou DE 198 48 744). Il est connu aussi de prévoir une embase sur le réservoir qui est retenue dans un réceptacle approprié issu du collecteur. D'autres solutions connues utilisent le sertissage d'une languette ou encore un système d'accrochage par boutonnière (voir US 5 713 217).

Toutes ces opérations nécessitent la mise en place de pièces ou d'outils supplémentaires qui compliquent le procédé.

L'invention a notamment pour but de surmonter de tels inconvénients.

Elle vise en particulier à proposer un échangeur de chaleur du type précité dans lequel le pré-assemblage peut s'effectuer d'une manière particulièrement simple sans outils et sans utiliser de support supplémentaire.

L'invention propose à cet effet un échangeur de chaleur du type défini en introduction, dans lequel le réservoir est muni d'au moins un organe d'accrochage présentant un crochet, ledit crochet étant agencé pour s'engager dans une ouverture aménagée dans la paroi du collecteur dans une position choisie, en laquelle le crochet et une zone, dite de contact, du réservoir sont en appui de part et d'autre de la paroi du collecteur, ce qui permet une fixation provisoire par gravité du réservoir sur le collecteur pour le brasage.

Ainsi, le pré-assemblage s'effectue simplement à l'aide d'au moins un crochet particulier formé sur le réservoir, qui vient s'engager dans une ouverture correspondante de la paroi du collecteur pour assurer un maintien en position de manière auto-portante, sous le simple effet de la gravité.

L'assemblage du réservoir sur le collecteur et la fabrication de l'échangeur sont ainsi considérablement simplifiés.

Selon une autre caractéristique de l'invention, le réservoir comprend un bossage longitudinal qui s'étend sur une partie au moins de la longueur du réservoir et qui présente une face d'appui généralement concave définissant ladite zone de contact du réservoir venant en appui contre le collecteur.

Dans l'invention, la face d'appui présente une forme conjuguée de celle de la paroi du collecteur dans la région d'ouverture et, de façon avantageuse, le crochet fait saillie par rapport à cette face d'appui.

Dans une forme de réalisation préférée de l'invention, le crochet présente une extrémité recourbée en forme générale de U, qui est agencée pour déboucher à l'intérieur de la paroi du collecteur au travers de l'ouverture.

De préférence, le crochet est délimité par deux faces planes parallèles qui définissent une largeur de crochet, tandis que l'ouverture du collecteur est de forme générale rectangulaire ayant une largeur légèrement supérieure à la largeur du crochet.

Dans une première forme générale de réalisation de l'invention, l'organe d'accrochage est rapporté sur la paroi du réservoir.

Il est avantageux, pour cela, que l'organe d'accrochage comporte un corps, dont ledit crochet constitue une excroissance, ledit corps étant muni de moyens de sertissage opposés audit crochet et agencés pour coopérer avec le bossage formé sur le réservoir, au niveau d'une encoche prévu dans ledit bossage.

Dans une deuxième forme générale de réalisation de l'invention, l'organe d'accrochage est réalisé d'une seule pièce avec la paroi du réservoir.

Dans ce cas, l'organe d'accrochage comprend un corps qui fait avantageusement saillie par rapport à la paroi du réservoir, le crochet étant réalisé par déformation de la matière du corps. En particulier, cette déformation peut être réalisée par encochage et poinçonnage.

Dans une forme de réalisation préférée, l'échangeur comprend deux organes d'accrochage espacés dans la direction longitudinale du réservoir et agencés pour s'engager respectivement dans deux ouvertures espacées dans la direction longitudinale du collecteur.

Le collecteur est formé de préférence de deux demi-coquilles assemblées, ou encore d'une seule pièce. Quant au réservoir, celui-ci est formé de préférence d'une seule pièce par extrusion, ou encore à partir d'une tôle roulée.

Dans l'invention, l'échangeur de chaleur constitue avantageusement un condenseur de climatisation.

Sous un autre aspect, l'invention concerne un procédé de fabrication d'un échangeur de chaleur tel que défini précédemment, ce procédé comprenant les opérations suivantes:
a) fournir un collecteur délimité par une paroi de forme générale tubulaire dans laquelle est aménagée au moins une ouverture d'accrochage ;
b) fournir un réservoir délimité par une paroi de forme générale tubulaire, le réservoir étant muni d'au moins un organe d'accrochage présentant un crochet formé en saillie par rapport à la paroi dudit réservoir;
c) engager le crochet du réservoir dans l'ouverture du collecteur jusqu'à ce que le crochet et une zone, dite de contact, du réservoir soient en appui de part et d'autre de la paroi du collecteur, le réservoir s'étendant ainsi en porte à faux par rapport au collecteur, ce qui assure une fixation provisoire par gravité du réservoir sur le collecteur, de manière à fournir un ensemble;
d) braser l'ensemble pour réaliser une fixation définitive du réservoir sur le collecteur.

Dans une première variante, l'opération b) comprend une étape consistant à rapporter l'organe d'accrochage sur la paroi du réservoir. Cette opération comprend avantageusement le sertissage d'un corps de l'organe d'accrochage sur un bossage formé sur la paroi du réservoir, ledit crochet constituant une excroissance dudit corps.

Dans une autre variante, l'opération b) comprend une étape consistant à réaliser l'organe d'accrochage d'une seule pièce avec la paroi du réservoir. Avantageusement, l'opération b) consiste à former un corps de l'organe d'accrochage en saillie par rapport à la paroi du réservoir et à réaliser le crochet par déformation de la matière du corps. Avantageusement, le crochet est réalisé par une opération d'encochage suivi par un poinçonnage.

Il est avantageux que l'opération c) consiste à orienter le crochet de manière qu'il présente une extrémité tournée vers le haut, à engager le crochet dans l'ouverture et à basculer le réservoir par rotation autour du crochet jusqu'à ce que ladite zone de contact du réservoir vienne en appui contre la paroi du collecteur.

Dans la description qui suit, donnée à titre d'exemple, on se réfère aux dessins annexés sur lesquels :
- la figure 1 est une vue en coupe longitudinale d'un échangeur de chaleur selon l'invention, ici d'un condenseur, muni d'un réservoir ;
- la figure 2 est une vue d'extrémité, à échelle agrandie du collecteur et du réservoir de l'échangeur de chaleur de la figure 1 ;
- la figure 3 est une vue en coupe, à échelle agrandie selon la ligne III-III de la figure 1 ;
- la figure 4 est une vue de face du collecteur avant assemblage du réservoir ;
- la figure 5 est une vue en coupe, à échelle agrandie, selon la ligne V-V de la figure 4 ;
- la figure 6 est une vue en coupe axiale du réservoir équipée de deux organes d'accrochage, avant montage sur le collecteur ;
- la figure 7 est une vue d'extrémité, à échelle agrandie du réservoir de la figure 6 ;
- les figures 8A, 8B et 8C illustrent trois phases successives de l'assemblage du réservoir sur le collecteur correspondant ;
- la figure 9 est une vue partielle en perspective d'un réservoir muni d'un organe d'accrochage réalisé d'une seule pièce avec le réservoir ;
- la figure 10 est un détail, à échelle agrandie, de la figure 9 ;
- la figure 11 est une vue partielle en coupe illustrant l'assemblage de l'organe d'accrochage du réservoir des figures 9 et 10 dans un collecteur ;
- la figure 12 est une vue en coupe du crochet de l'organe d'accrochage des figures 9 à 11 ; et
- les figures 13 et 14 sont des vues en perspective illustrant deux étapes de fabrication de l'organe d'accrochage par déformation de matière.

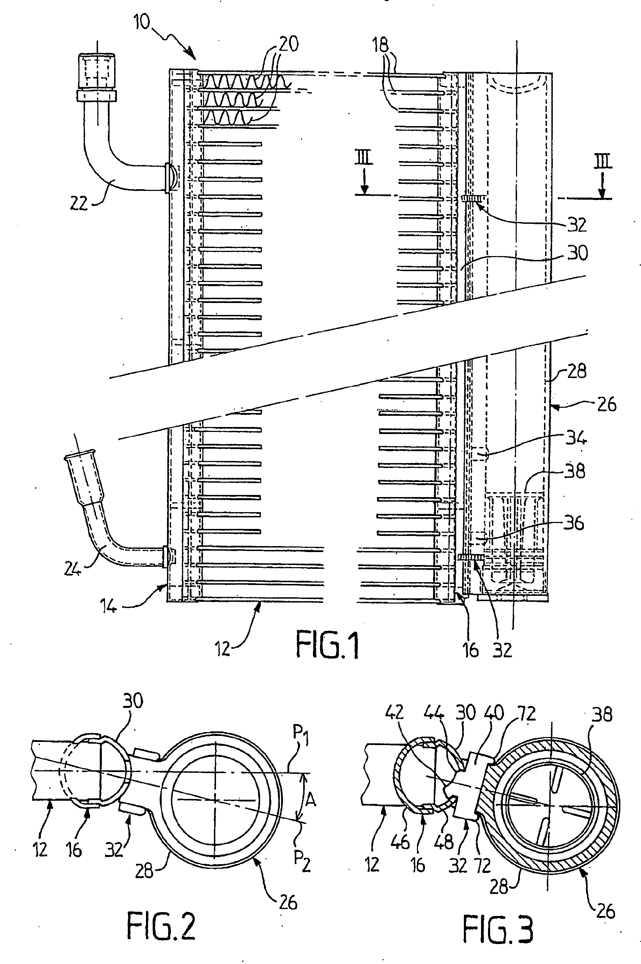

On se réfère d'abord à la figure 1 qui montre un échangeur de chaleur 10, réalisé ici sous la forme d'un condenseur qui comprend un faisceau 12 monté entre un collecteur 14 et un collecteur 16 situés respectivement à gauche et à droite du dessin. Le faisceau 12 est formé par une multiplicité de tubes plats 18 entre lesquels sont montés des intercalaires ondulés 20 formant surfaces d'échange de chaleur. Les collecteurs 14 et 16 sont de forme générale tubulaire et ont leurs axes parallèles.

Le collecteur 14 est muni d'une tubulure d'entrée 22 pour un fluide réfrigérant en phase gazeuse et d'une sortie 24 pour le fluide réfrigérant en phase liquide. Le fluide réfrigérant circule en plusieurs passes dans le faisceau et est condensé par échange thermique avec un flux d'air qui balaye le faisceau. Sur le collecteur 16, est fixé extérieurement un réservoir 26 délimité par une paroi 28 de forme générale tubulaire d'axe parallèle à celui du collecteur 16. Le réservoir 26 est fixé provisoirement, avant brasage, sur une paroi 30 du collecteur 16 par deux organes d'accrochage 32 qui seront décrits plus loin. Le réservoir 26 communique avec le collecteur 16 au travers de deux passages 34 et 36. Par ailleurs, le réservoir 26 loge intérieurement une cartouche remplaçable 38 qui constitue un élément filtrant et/ou déshydratant.

Le condenseur 10 de la figure 1 est destiné à être réalisé par assemblage de ses différents composants puis brasage en une seule opération dans un four approprié. Les organes d'accrochage 32 précités sont destinés à assurer un montage de fixation provisoire du réservoir sur le collecteur, sans utiliser d'outil ou de support supplémentaire.

Comme on peut le voir sur la figure 2, le réservoir 26 admet un plan général de symétrie P2 qui est décalé angulairement par rapport au plan général de symétrie P1 du faisceau du condenseur. Le décalage angulaire correspond à un angle A qui, dans l'exemple, est de 13°.

En considérant maintenant la figure 3, on voit que l'organe d'accrochage 32 présente un corps 40 rattaché à la paroi 28 du réservoir 26 et un crochet 42 qui est formé en saillie par rapport au corps 40. Ce crochet est agencé pour s'engager dans une ouverture 44 aménagée dans la paroi 30 du collecteur 16 dans une position choisie. Comme on peut le voir aux figures 2 et 3, le collecteur 16 est formé de deux demi-coquilles assemblées, à savoir une demi-coquille 46 dans laquelle débouchent les tubes 18 du faisceau et une demi-coquille 48 qui est tournée du côté du réservoir et dans laquelle est formée l'ouverture 44. Les détails sur la structure de l'organe d'accrochage 32 seront décrits plus loin.

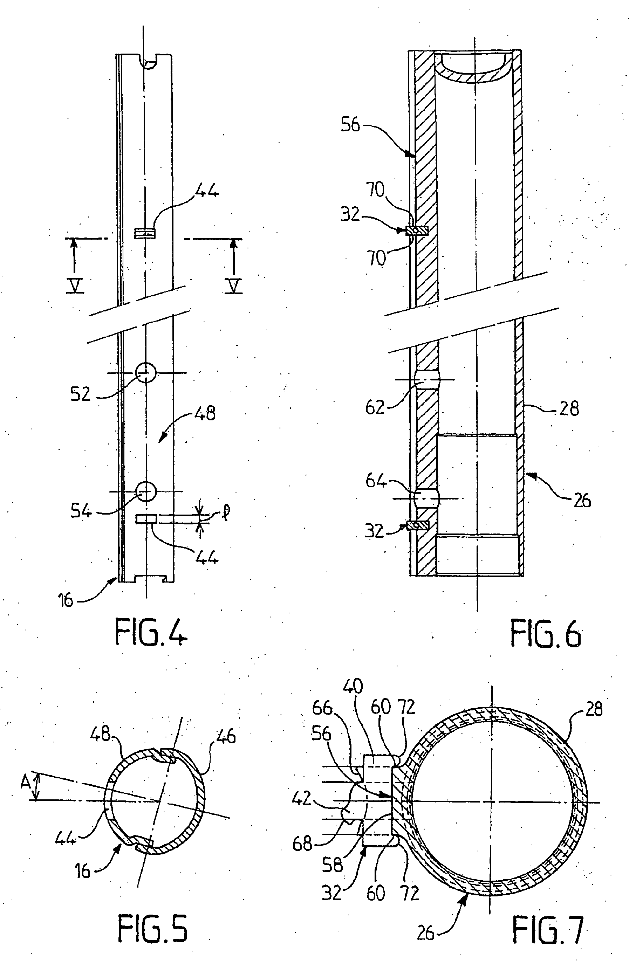

On se réfère maintenant aux figures 4 et 5 pour décrire le collecteur 16. Dans la demi-coquille 48 du collecteur sont formées deux ouvertures 44 de forme générale rectangulaire qui sont espacées dans la direction longitudinale. Elles sont destinées à recevoir respectivement les deux crochets 42 des organes d'accrochage. Entre les deux ouvertures 44, sont formées deux ouvertures circulaires 52 et 54 propres à contribuer à former les passages 34 et 36 précités. Les deux ouvertures 44 ont la même largeur 1 (figure 4) qui est sensiblement supérieure à l'épaisseur ou largeur correspondante du crochet 42, comme on le verra plus loin.

On se réfère maintenant aux figures 6 et 7. Dans l'exemple de réalisation décrit, le réservoir 26 est formé par extrusion d'une matière métallique, avantageusement de l'aluminium ou un alliage d'aluminium, mais il pourrait aussi bien être réalisé à partir d'une tôle roulée. Le réservoir comporte un bossage longitudinal 56 qui s'étend sur toute la longueur du réservoir et qui présente une face d'appui 66 généralement concave et deux faces latérales 60 généralement parallèles entre elles. Dans l'épaisseur de la paroi 28 et du bossage 56, sont aménagées deux ouvertures circulaires 62 et 64 propres à venir en correspondance des ouvertures 52 et 54 du collecteur lorsque le collecteur et le réservoir sont assemblés l'un contre l'autre. Comme on le voit sur la figure 7, la face d'appui 66 du bossage 56 présente une forme conjuguée de celle de la paroi du collecteur, notamment dans la région de l'ouverture 44, voire sur toute la hauteur du réservoir.

Le crochet 42 fait saillie par rapport à cette face d'appui et il présente une extrémité recourbée 68 en forme générale de U, qui est agencée pour déboucher à l'intérieur de la paroi du collecteur au travers de l'ouverture 44 (figure 3).

Le crochet est délimité par deux faces planes parallèles 70 (figure 6) qui définissent une largeur de crochet qui est légèrement inférieure à la largeur 1 de l'ouverture qui la reçoit.

Comme on le voit aux figures 3 et 7, l'organe d'accrochage 32 est rapporté sur la paroi 28 du réservoir 26 et plus particulièrement sur le bossage 56. A cet effet, le corps 40 comporte une face 58 en appui contre le fond d'une encoche pratiquée dans l'épaisseur du bossage 56 ainsi que deux pattes de sertissage 72 agencés pour coopérer de part et d'autre du bossage avec respectivement les faces latérales 60.

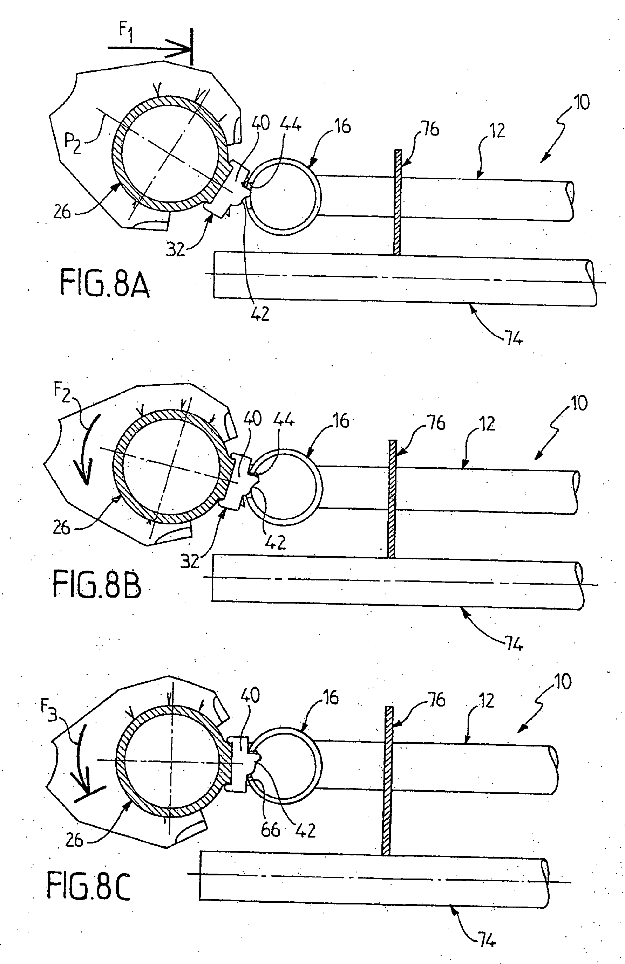

On se réfère maintenant aux figures 8A à 8C pour décrire la mise en place du réservoir sur le collecteur. On a représenté sur la figure 8A un tapis 74 disposé horizontalement et destiné à assurer le convoyage du condenseur au travers d'un four de brasage (non représenté). Le condenseur 10 est disposé à plat sur le tapis 74 par l'intermédiaire d'un support 76 appelé montage de brasage qui supporte le faisceau 12 du condenseur.

Tout d'abord, on présente le réservoir 26, préalablement muni de ses deux organes d'accrochage 32, en regard du collecteur 16 comme montré à la figure 8A. Dans cet exemple, le collecteur 16 est réalisé d'une seule pièce. On introduit alors simultanément les deux crochets 42, avec leurs extrémités respectives tournées vers le haut, dans les ouvertures correspondantes 44 du collecteur 16 (flèche F1). Cette opération s'effectue ici manuellement, le plan de symétrie P2 étant incliné par rapport à l'horizontale.

Dans une deuxième opération (figure 8B) on fait pivoter le réservoir par rapport au collecteur en prenant appui sur les crochets 42 dont les extrémités respectives s'engagent à l'intérieur du collecteur (flèche F2). Ensuite, on fait basculer l'ensemble vers le bas (flèche F3) pour atteindre la position de la figure 8C, dans laquelle le réservoir est monté sur le collecteur.

Dans cette position, la face d'appui 66 du bossage 56 formé sur le réservoir 26 vient s'appliquer directement contre la paroi 30 du collecteur, au moins dans la région de l'ouverture 44. Le réservoir est ainsi monté provisoirement dans sa position de fixation et se trouve auto-supporté naturellement par l'effet de la gravité. Les différents composants du condenseur seront ensuite brasés ensemble, en une seule opération, dans le four de brasage.

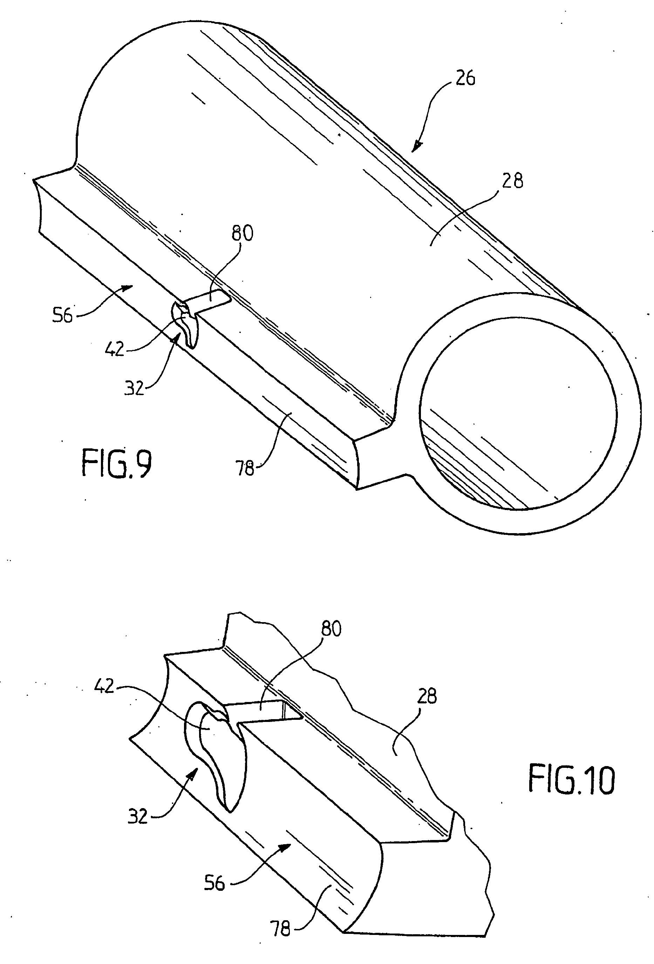

On se réfère maintenant aux figures 9 et 10 qui constituent une deuxième forme de réalisation de l'invention. On reconnaît sur la figure 9 le réservoir 26 avec sa paroi 28 et son bossage longitudinal 56. Le réservoir, dont seul un tronçon est représenté, comporte deux crochets 42 qui sont réalisés monobloc avec lui.

Pour cela, chacun des crochets 42 est réalisé par déformation de la matière du corps, et plus particulièrement par encochage et poinçonnage du bossage 56. Le bossage 56 présente une face d'appui 78 de forme concave qui présente une forme homologue de celle de la paroi du collecteur. Cette face d'appui 78 constitue également la face d'appui des deux crochets 42 qui sont formés à partir de la matière du bossage par encochage et déformation de celui-ci.

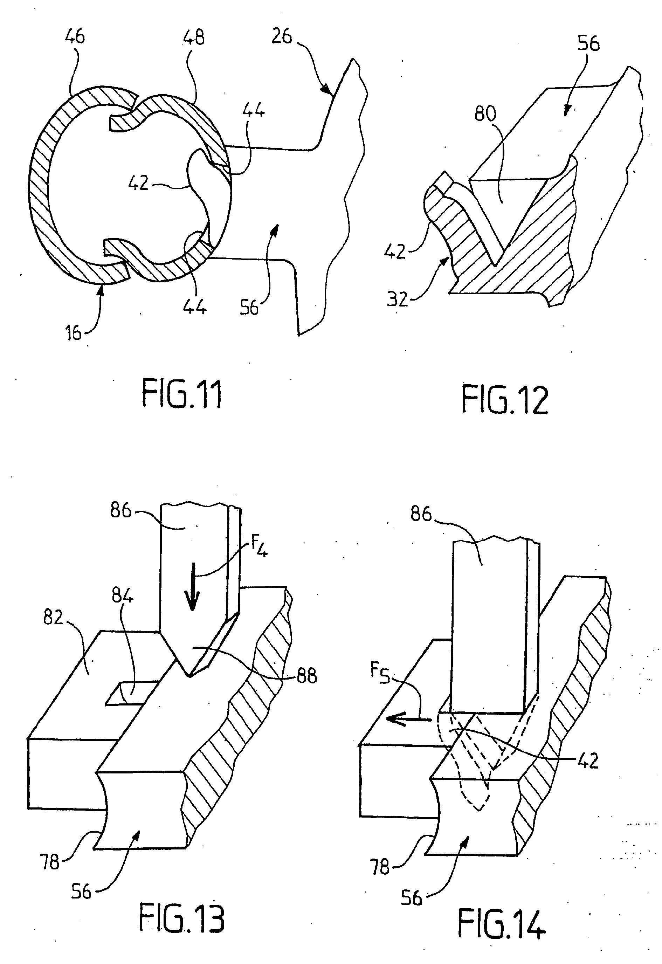

On aperçoit sur les figures 9 et 10 le crochet 42 lui-même qui est séparé du reste du bossage 56 par une encoche 80 en forme générale de V comme on le voit mieux sur la coupe de la figure 12.

La figure 11 montre le réservoir maintenu provisoirement dans une position choisie par rapport au collecteur 16 grâce aux crochets 32. Pour réaliser leurs crochets 42, on utilise un outillage comme montré aux figures 13 et 14. On utilise une matrice de mise en forme 82 qui est appliquée latéralement contre la face d'appui 78 du bossage 56. Cette matrice comporte une découpe 84 destinée à servir à la conformation du crochet. On utilise en outre un poinçon d'encochage 86 qui présente une pointe 88. Le poinçon 86 est déplacé verticalement vers le bas (flèche F4) pour pénétrer dans la matière du bossage et réaliser ainsi le crochet 42 qui est écarté vers la gauche dans la direction de la flèche F5 (figure 14) pour venir se loger dans la découpe 84 de la matrice 82.

Dans la position de la figure 14, le crochet est définitivement formé. Il suffit ensuite de relever le poinçon et d'enlever la matrice. Le mode de réalisation des figures 9 à 14 offre l'avantage de permettre de réaliser le crochet ou les crochets en une seule pièce avec le réservoir, ce qui évite des opérations de sertissage, mais nécessite en revanche des opérations de conformation.

Dans tous les cas, on permet un pré-assemblage aisé du réservoir sur le collecteur, le réservoir étant simplement auto-supporté par l'effet de la gravité.

On garantit ainsi un maintien provisoire pendant toute l'opération de brasage, sans qu'il soit nécessaire de faire appel à un outillage supplémentaire.

Bien entendu, l'invention n'est pas limitée aux formes de réalisation décrites précédemment et s'étend à d'autres variantes.

En particulier, l'invention n'est pas limitée à des échangeurs de chaleur du type condenseur.

## Revendications

1. Echangeur de chaleur comprenant un collecteur (16) délimité par une paroi (30) de forme générale tubulaire et un réservoir (26) délimité par une paroi (28) de forme générale tubulaire, qui est assemblé par brasage sur le collecteur,
**caractérisé en ce que** le réservoir (26) est muni d'au moins un organe d'accrochage (32) présentant un crochet (42), le crochet (42) étant agencé pour s'engager dans une ouverture (44) aménagée dans la paroi (30) du collecteur (16) dans une position choisie, en laquelle le crochet (42) et une zone (66 ; 78), dite de contact, du réservoir (26) sont en appui de part et d'autre de la paroi (30) du collecteur, ce qui permet une fixation provisoire par gravité du réservoir sur le collecteur pour le brasage.

2. Echangeur de chaleur selon la revendication 1, **caractérisé en ce que** le réservoir (26) comprend un bossage longitudinal (56) qui s'étend sur une partie au moins de la longueur du réservoir et qui présente une face d'appui (66 ; 78) généralement concave, définissant ladite zone de contact venant en appui contre le collecteur (16).

3. Echangeur de chaleur selon la revendication 2, **caractérisé en ce que** la face d'appui (66 ; 78) présente une forme conjuguée de celle de la paroi du collecteur dans la région de l'ouverture (44).

4. Echangeur de chaleur selon l'une des revendications 2 et 3, **caractérisé en ce que** le crochet (42) fait saillie par rapport à la face d'appui (66 ; 78).

5. Echangeur de chaleur selon l'une des revendications 1 à 4, **caractérisé en ce que** le crochet (42) présente une extrémité recourbée (68) en forme générale de U, qui est agencée pour déboucher à l'intérieur de la paroi (30) du collecteur au travers de l'ouverture (44).

6. Echangeur de chaleur selon l'une des revendications 1 à 5, **caractérisé en ce que** le crochet (42) est délimité par deux faces planes parallèles (70) qui définissent une largeur de crochet, et **en ce que** l'ouverture (44) du collecteur est de forme générale rectangulaire ayant une largeur (1) légèrement supérieure à la largeur du crochet.

7. Echangeur de chaleur selon l'une des revendications 1 à 6, **caractérisé en ce que** l'organe d'accrochage (32) est rapporté sur la paroi (28) du réservoir (26).

8. Echangeur de chaleur selon la revendication 7, **caractérisé en ce que** l'organe d'accrochage comporte un corps (40), dont ledit crochet (42) constitue une excroissance, ledit corps (40) étant muni de moyens de sertissage (72) opposés audit crochet (42) et agencés pour coopérer avec le bossage (56).

9. Echangeur de chaleur selon l'une des revendications 1 à 6, **caractérisé en ce que** l'organe d'accrochage (32) est réalisé d'une seule pièce avec la paroi (28) du réservoir (26).

10. Echangeur de chaleur selon la revendication 9, **caractérisé en ce que** l'organe d'accrochage (32) comprend un corps (40) faisant saillie par rapport à la paroi du réservoir et **en ce que** le crochet (42) est réalisé par déformation de la matière du corps.

11. Echangeur de chaleur selon la revendication 10, **caractérisé en ce que** le crochet (42) est réalisé par encochage et poinçonnage.

12. Echangeur de chaleur selon l'une des revendications 1 à 11, **caractérisé en ce qu'**il comprend deux organes d'accrochage (32) espacés dans la direction longitudinale du réservoir (26) et agencés pour s'engager respectivement dans deux ouvertures (44) espacées dans la direction longitudinale du collecteur (16).

13. Echangeur de chaleur selon l'une des revendications 1 à 12, **caractérisé en ce que** le collecteur (16) est formé de deux demi-coquilles (46, 48) assemblées.

14. Echangeur de chaleur selon l'une des revendications 1 à 12, **caractérisé en ce que** le collecteur (16) est réalisé d'une seule pièce.

15. Echangeur de chaleur selon la revendication 14, **caractérisé en ce que** le réservoir (26) est formé d'une seule pièce par extrusion.

16. Echangeur de chaleur selon la revendication 14, **caractérisé en ce que** le réservoir (26) est réalisé à partir d'une tôle roulée.

17. Echangeur de chaleur selon l'une des revendications 1 à 16, **caractérisé en ce qu'**il constitue un condenseur de climatisation.

18. Procédé de fabrication d'un échangeur de chaleur selon l'une des revendications 1 à 17, **caractérisé en ce qu'**il comprend les opérations suivantes :
a) fournir un collecteur (16) délimité par une paroi (30) de forme générale tubulaire dans laquelle est aménagée au moins une ouverture d'accrochage (44) ;
b) fournir un réservoir (26) délimité par une paroi (28) de forme générale tubulaire, le réservoir étant muni d'au moins un organe d'accrochage (32) présentant un crochet (42) formé en saillie par rapport à la paroi (28) dudit réservoir;
c) engager le crochet (42) du réservoir dans l'ouverture (44) du collecteur jusqu'à ce que le crochet (42) et une zone (66 ; 78), dite de contact, du réservoir (26) soient en appui de part et d'autre de la paroi (30) du collecteur, le réservoir (26) s'étendant ainsi en porte-à-faux par rapport au collecteur, ce qui assure une fixation provisoire par gravité du réservoir sur le collecteur, de manière à fournir un ensemble ;
d) braser l'ensemble pour réaliser une fixation définitive du réservoir (26) sur le collecteur (16).

19. Procédé selon la revendication 18, **caractérisé en ce que** l'opération b) comprend une étape consistant à rapporter l'organe d'accrochage (32) sur la paroi (26) du réservoir.

20. Procédé selon la revendication 19, **caractérisé en ce que** l'opération b) comprend le sertissage d'un corps (40) de l'organe d'accrochage (32), ledit crochet (42) constituant une excroissance dudit corps, sur un bossage (56) formé sur la paroi du réservoir.

21. Procédé selon la revendication 18, **caractérisé en ce que** l'opération b) comprend une étape consistant à réaliser l'organe d'accrochage (32) d'une seule pièce avec la paroi (28) du réservoir.

22. Procédé selon la revendication 21, **caractérisé en ce que** l'opération b) consiste à former un corps (40) de l'organe d'accrochage (32) en saillie par rapport à la paroi du réservoir (26) et à réaliser le crochet (42) par déformation de la matière du corps.

23. Procédé selon la revendication 22, **caractérisé en ce que** le crochet (42) est réalisé par une opération d'encochage suivie par un poinçonnage.

24. Procédé selon l'une des revendications 18 à 23, **caractérisé en ce que** l'opération c) consiste à orienter le crochet (32) de manière qu'il présente une extrémité (68) tournée vers le haut, à engager le crochet dans l'ouverture (44), et à basculer le réservoir par rotation autour du crochet jusqu'à ce que le ladite zone de contact (66 ; 78), du réservoir (26) vienne en appui contre la paroi (30) du collecteur.

## Patentansprüche

1. Wärmetauscher, umfassend einen Kollektor (16), der von einer Wand (30) von allgemeiner röhrenförmiger Form begrenzt ist, und einen Behälter (26), der von einer Wand (28) von allgemeiner röhrenförmiger Form begrenzt ist, der durch Löten auf dem Kollektor montiert ist,
**dadurch gekennzeichnet, dass** der Behälter (26) mit mindestens einem Befestigungselement (32) versehen ist, das einen Haken (42) aufweist, wobei der Haken (42) derart vorgesehen ist, dass er in eine Öffnung (44) eingreift, die in der Wand (30) des Kollektors (16) in einer ausgewählten Position angeordnet ist, in der der Haken (42) und eine so genannte Kontaktzone (66; 78) des Behälters (26) beiderseits der Wand (30) des Kollektors anliegen, wodurch eine provisorische Befestigung des Behälters auf dem Kollektor durch Schwerkraft zum Löten möglich ist.

2. Wärmetauscher nach Anspruch 1, **dadurch gekennzeichnet, dass** der Behälter (26) einen Längswulst (56) umfasst, der sich auf mindestens einem Teil der Länge des Behälters erstreckt und eine im Allgemeinen konkave Auflagefläche (66; 78) aufweist, die die Kontaktzone definiert, die am Kollektor (16) zur Anlage gelangt.

3. Wärmetauscher nach Anspruch 2, **dadurch gekennzeichnet, dass** die Auflagefläche (66; 78) eine an jene der Wand des Kollektors im Bereich der Öffnung (44) angepasste Form aufweist.

4. Wärmetauscher nach einem der Ansprüche 2 und 3, **dadurch gekennzeichnet, dass** der Haken (42) in Bezug zur Auflagefläche (66; 78) herausragt.

5. Wärmetauscher nach einem der Ansprüche 1 bis 4, **dadurch gekennzeichnet, dass** der Haken (42) ein gekrümmtes Ende (68) von allgemeiner U-Form aufweist, das derart angeordnet ist, dass es in das Innere der Wand (30) des Kollektors durch die Öffnung (44) mündet.

6. Wärmetauscher nach einem der Ansprüche 1 bis 5, **dadurch gekennzeichnet, dass** der Haken (42) von zwei parallelen flachen Seiten (70) begrenzt ist, die eine Hakenbreite definieren, und dass die Öffnung (44) des Kollektors von allgemeiner rechteckiger Form mit einer etwas größeren Breite (1) als die Breite des Hakens ist.

7. Wärmetauscher nach einem der Ansprüche 1 bis 6, **dadurch gekennzeichnet, dass** das Befestigungselement (32) auf die Wand (28) des Behälters (26) aufgesetzt ist.

8. Wärmetauscher nach Anspruch 7, **dadurch gekennzeichnet, dass** das Befestigungselement einen Körper (40) umfasst, dessen Haken (42) eine Ausstülpung darstellt, wobei der Körper (40) mit Pressmitteln (72) gegenüber dem Haken (42) versehen ist, die dazu vorgesehen sind, mit dem Wulst (56) zusammenzuwirken.

9. Wärmetauscher nach einem der Ansprüche 1 bis 6, **dadurch gekennzeichnet, dass** das Befestigungselement (32) aus einem Stück mit der Wand (28) des Behälters (26) hergestellt ist.

10. Wärmetauscher nach Anspruch 9, **dadurch gekennzeichnet, dass** das Befestigungselement (32) einen Körper (40) umfasst, der in Bezug zu der Wand des Behälters herausragt, und dass der Haken (42) durch Verformung des Materials des Körpers hergestellt ist.

11. Wärmetauscher nach Anspruch 10, **dadurch gekennzeichnet, dass** der Haken (42) durch Einkerben und Stanzen hergestellt ist.

12. Wärmetauscher nach einem der Ansprüche 1 bis 11, **dadurch gekennzeichnet, dass** er zwei Befestigungselemente (32) umfasst, die in Längsrichtung des Behälters (26) beabstandet und dazu vorgesehen sind, jeweils in zwei Öffnungen (44) einzugreifen, die in Längsrichtung des Kollektors (16) beabstandet sind.

13. Wärmetauscher nach einem der Ansprüche 1 bis 12, **dadurch gekennzeichnet, dass** der Kollektor (16) von zwei zusammengefügten Halbschalen (46, 48) gebildet ist.

14. Wärmetauscher nach einem der Ansprüche 1 bis 12 **dadurch gekennzeichnet, dass** der Kollektor (16) aus einem Stück hergestellt ist.

15. Wärmetauscher nach Anspruch 14, **dadurch gekennzeichnet, dass** der Behälter (26) aus einem Stück durch Extrusion hergestellt ist.

16. Wärmetauscher nach Anspruch 14, **dadurch gekennzeichnet, dass** der Behälter (26) aus einem rundgebogenen Blech hergestellt ist.

17. Wärmetauscher nach einem der Ansprüche 1 bis 16, **dadurch gekennzeichnet, dass** er einen Klimatisierungskondensator darstellt.

18. Verfahren zur Herstellung eines Wärmetauschers nach einem der Ansprüche 1 bis 17, **dadurch gekennzeichnet, dass** es die folgenden Schritte umfasst:
a) Bereitstellung eines Kollektors (16), der von einer Wand (30) von allgemeiner röhrenförmiger Form begrenzt ist, in der mindestens eine Befestigungsöffnung (44) vorgesehen ist;
b) Bereitstellung eines Behälters (26), der von einer Wand (28) von allgemeiner röhrenförmiger Form begrenzt ist, wobei der Behälter mit mindestens einem Befestigungselement (32) versehen ist, das einen Haken (42) aufweist, der in Bezug zur Wand (28) des Behälters herausragt;
c) Einführen des Hakens (42) des Behälters in die Öffnung (44) des Kollektors, bis der Haken (42) und eine so genannte Kontaktzone (66; 78) des Behälters (26) beiderseits der Wand (30) des Kollektors anliegen, wobei sich der Behälter (26) somit in Bezug zum Kollektor vorstehend erstreckt, wodurch eine provisorische Befestigung des Behälters auf dem Kollektor durch Schwerkraft, um eine Einheit bereitzustellen, gewährleistet ist;
d) Verlöten der Einheit, um eine endgültige Befestigung des Behälters (26) auf dem Kollektor (16) zu verwirklichen.

19. Verfahren nach Anspruch 18, **dadurch gekennzeichnet, dass** der Schritt b) einen Vorgang umfasst, der darin besteht, das Befestigungselement (32) auf die Wand (26) des Behälters aufzusetzen.

20. Verfahren nach Anspruch 19, **dadurch gekennzeichnet, dass** der Schritt b) das Pressen eines Körpers (40) des Befestigungselements (32) auf einen an der Wand des Behälters ausgebildeten Wulst (56), wobei der Haken (42) eine Ausstülpung des Körpers darstellt, umfasst.

21. Verfahren nach Anspruch 18, **dadurch gekennzeichnet, dass** der Schritt b) einen Vorgang umfasst, der darin besteht, das Befestigungselement (32) aus einem Stück mit der Wand (28) des Behälters herzustellen.

22. Verfahren nach Anspruch 21, **dadurch gekennzeichnet, dass** der Schritt b) darin besteht, einen Körper (40) des Befestigungselements (32) in Bezug zur Wand des Behälters (26) herausragend auszubilden und den Haken (42) durch Verformung des Materials des Körpers herzustellen.

23. Verfahren nach Anspruch 22, **dadurch gekennzeichnet, dass** der Haken (42) durch einen Vorgang des Einkerbens, gefolgt von einem Stanzen, hergestellt wird.

24. Verfahren nach einem der Ansprüche 18 bis 23, **dadurch gekennzeichnet, dass** der Schritt c) darin besteht, den Haken (32) derart auszurichten, dass er ein nach oben gerichtetes Ende (68) aufweist, den Haken in die Öffnung (44) einzusetzen und den Behälter durch Drehen um den Haken zu kippen, bis die Kontaktzone (66; 78) des Behälters (26) an der Wand (30) des Kollektors zur Anlage gelangt.

## Claims

1. Heat exchanger comprising a header (16) delimited by a wall (30) of tubular overall shape and a tank (26) delimited by a wall (28) of tubular overall shape, which is assembled on the header by brazing,
**characterized in that** the tank (26) is provided with at least one catching member (32) having a hook (42), the hook (42) being designed to engage in an opening (44) made in the wall (30) of the header (16) in a chosen position, in which position the hook (42) and a region (66; 78), called the contact region, of the tank (26) press on either side of the wall (30) of the header, thereby providing a temporary attachment of the tank to the header under the effect of gravity for brazing.

2. Heat exchanger according to Claim 1, **characterized in that** the tank (26) comprises a longitudinal boss (56) which extends over at least part of the length of the tank and has a generally concave bearing face (66; 78), defining the said region of contact that comes to bear against the header (16).

3. Heat exchanger according to Claim 2, **characterized in that** the bearing face (66; 78) has a shape that mates with that of the wall of the header in the region of the opening (44).

4. Heat exchanger according to one of Claims 2 and 3, **characterized in that** the hook (42) projects with respect to the bearing face (66; 78).

5. Heat exchanger according to one of Claims 1 to 4, **characterized in that** the hook (42) has a bent-over end (68) in the overall shape of a U, which is designed to emerge inside the wall (30) of the header through the opening (44).

6. Heat exchanger according to one of Claims 1 to 5, **characterized in that** the hook (42) is delimited by two parallel plane faces (70) which define a hook width, and **in that** the opening (44) of the header is of rectangular overall shape having a width (1) slightly greater than the width of the hook.

7. Heat exchanger according to one of Claims 1 to 6, **characterized in that** the catching member (32) is attached to the wall (28) of the tank (26).

8. Heat exchanger according to Claim 7, **characterized in that** the catching member comprises a body (40) of which the said hook (42) constitutes a protuberance, the said body (40) being provided with crimping means (72) on the opposite side to the said hook (42) and designed to collaborate with the boss (56).

9. Heat exchanger according to one of Claims 1 to 6, **characterized in that** the catching member (32) is formed as one piece with the wall (28) of the tank (26).

10. Heat exchanger according to Claim 9, **characterized in that** the catching member (32) comprises a body (40) projecting with respect to the wall of the tank and **in that** the hook (42) is produced by deforming the material of the body.

11. Heat exchanger according to Claim 10, **characterized in that** the hook (42) is produced by notching and punching.

12. Heat exchanger according to one of Claims 1 to 11, **characterized in that** it comprises two catching members (32) spaced apart in the longitudinal direction of the tank (26) and designed to engage respectively in two openings (44) which are spaced apart in the longitudinal direction of the header (16).

13. Heat exchanger according to one of Claims 1 to 12, **characterized in that** the header (16) is formed of two assembled half-shells (46, 48).

14. Heat exchanger according to one of Claims 1 to 12, **characterized in that** the header (16) is produced as a single piece.

15. Heat exchanger according to claim 14, **characterized in that** the tank (26) is formed as a single piece by extrusion.

16. Heat exchanger according to claim 14, **characterized in that** the tank (26) is produced from rolled sheet.

17. Heat exchanger according to one of Claims 1 to 16, **characterized in that** it constitutes an air conditioning condenser.

18. Method of manufacturing a heat exchanger according to one of Claims 1 to 17, **characterized in that** it comprises the following operations:
a) supplying a header (16) delimited by a wall (30) of tubular overall shape in which at least one catching opening (44) is formed;
b) supplying a tank (26) delimited by a wall (28) of tubular overall shape, the tank being equipped with at least one catching member (32) having a hook (42) formed as a projection with respect to the wall (28) of the said tank;
c) engaging the hook (42) of the tank in the opening (44) of the header until the hook (42) and a region (66; 78), called the contact region, of the tank (26) are bearing on either side of the wall (30) of the header (30), tank (26) thus extending cantilever-fashion from the header, thereby providing a temporary attachment of the tank to the header under the effect of gravity so as to form an assembly;
d) brazing the assembly in order to create a permanent fixing of the tank (26) to the header (16).

19. Method according to Claim 18, **characterized in that** operation b) involves a step consisting in attaching the catching member (32) to the wall (26) of the tank.

20. Method according to Claim 19, **characterized in that** operation b) involves crimping a body (40) of the catching member (32), the said hook (42) constituting a protuberance of the said body, onto a boss (56) formed on the wall of the tank.

21. Method according to Claim 18, **characterized in that** operation b) involves a step consisting in creating the catching member (32) as a single piece with the wall (28) of the tank.

22. Method according to Claim 21, **characterized in that** operation b) consists in forming a body (40) of the catching member (32) projecting with respect to the wall of the tank (26) and in creating the hook (42) by deforming the material of the body.

23. Method according to Claim 22, **characterized in that** the hook (42) is produced by a notching operation followed by a punching operation.

24. Method according to one of Claims 18 to 23, **characterized in that** operation c) consists in orienting the hook (32) so that it has an end (68) facing upwards, in engaging the hook in the opening (44) and in pivoting the tank by rotation about the hook until the said contact region (66; 78) of the tank (26) comes to bear against the wall (30) of the header.
